# EUROPÄISCHE PATENTSCHRIFT

(11) **EP 3 247 935 B1**
(45) Veröffentlichungstag und Bekanntmachung des Hinweises auf die Patenterteilung: **02.12.2020**
(21) Anmeldenummer: 17702756.2
(22) Anmeldetag: 24.01.2017
(51) Int. Cl.: B60Q 1/076

(54) **VERFAHREN ZUM BESTIMMEN DER NULLPOSITION EINER SPIEGELEINRICHTUNG IN EINEM FAHRZEUG-SCHEINWERFER**
METHOD FOR DETERMINING THE ZERO POSITION OF A MIRROR MECHANISM IN A VEHICLE HEADLIGHT
PROCÉDÉ POUR DÉTERMINER LA POSITION ZÉRO D'UN DISPOSITIF RÉFLECTEUR DANS UN PHARE DE VÉHICULE

(30) Priorität: 05.02.2016 AT 500752016
(43) Veröffentlichungstag der Anmeldung: 29.11.2017
(73) Patentinhaber: ZKW Group GmbH, 3250 Wieselburg (AT)
(72) Erfinder: MAYER, Peter, 3371 Neumarkt an der Ybbs (AT); MITTERLEHNER, Thomas, 3240 Mank (AT)
(74) Vertreter: Patentanwaltskanzlei Matschnig & Forsthuber OG
(86) Internationale Anmeldenummer: PCT/AT2017/060008
(87) Internationale Veröffentlichungsnummer: WO 2017/132714

(56) Entgegenhaltungen:
- EP-A2- 1 433 655
- WO-A2-02/063206
- DE-A1- 19 737 653
- DE-A1-102014 001 201
- JP-A- 2016 162 682

## Beschreibung

Die Erfindung betrifft einen Scheinwerfer für Fahrzeuge, beispielsweise PKWs, der ein Lichtmodul (oder mehrere) mit zumindest einer Lichtquelle und zumindest einer Spiegeleinrichtung aufweist, wobei dem Lichtmodul ein Stellantrieb zugeordnet ist, mittels dessen das Lichtmodul zum Einstellen einer für den Betrieb voreingestellten Winkelposition verschwenkbar ist. Die Erfindung betrifft außerdem ein Verfahren zum Bestimmen einer Nullposition einer Winkelposition des Lichtmoduls in einem Scheinwerfer der genannten Art.

Scheinwerfer mit Spiegeleinrichtungen zum Umlenken des Lichts sowie zum Formen eines bestimmten gewünschten Lichtbildes sind wohlbekannt. Eine solche Spiegeleinrichtung kann ein einfacher Spiegel sein, der plan oder gewölbt sein kann, oder kann als Mikrospiegelarray (sogenanntes DLP, für Digital Light Processor) verwirklicht sein. In vielen Anwendungsfällen sind die Spiegeleinrichtungen mit der Lichtquelle und gegebenenfalls zugehörenden optischen Bauteilen in einem Lichtmodul zusammengefasst, und das Lichtmodul ist schwenkbar angeordnet, um eine gewünschte Betriebseinstellung auszuwählen, beispielsweise für eine Leuchtweitenregelung. Die Einstellung einer gewünschten Winkelposition durch Verschwenken des Spiegels wird durch einen Stellantrieb an sich bekannter Art erreicht. Hierbei tritt häufig die Problematik auf, dass zur zuverlässigen Festlegung der Winkelposition des Spiegels eine Nullposition des Stellantriebs vorausgesetzt wird.

Bei herkömmlichen Lösungen wird die Nullposition des Antriebsmotors des Spiegels dadurch ermittelt, dass der Motor gegen einen Anschlag verfahren wird oder über eine Referenzposition gefahren wird, die mittels eines mechanischen oder Hall-Effekt-Sensors abgefragt wird. Dies gestattet jedoch nur eine Bestimmung der Motorposition, bei der zusätzliche geometrische Einflüsse auf den Strahlverlauf, wie z.B. Toleranzen der Positionierung der optischen Komponenten oder ein Verziehen des Tragrahmens, nicht erfasst werden.

So beschreibt EP 1433 655 A2 eine digitale Beleuchtungseinrichtung für ein Fahrzeug mit einem digitalen Lichtreflektor mit einer Vielzahl von Mikro-Spiegelelementen, worin ein Mikro-Spiegelelement im OFF-Status auf ihn fallendes Licht auf eine optischen Absorber lenkt. WO 02/063206 offenbart eine Beleuchtungssystem, in der unerwünschte Lichtanteile in eine "Wärmefalle" geleitet werden. In DE 197 37 653 A1 werden umgelenkte Lichtteile auf einen Absorber gelenkt oder über eine Lichtumlenkvorrichtung zur Erzeugung eines Schlusslichts verwendet. Eine Nutzung von zum Absorber geleitetem Licht für eine Bestimmung der Nullposition ist jedoch nicht beschrieben.

Es ist daher eine Aufgabe der Erfindung, die oben erwähnten Nachteile zu überwinden und eine zuverlässige Erfassung der Nullposition zu ermöglichen.

Diese Aufgabe wird für einen Scheinwerfer der eingangs genannten Art erfindungsgemäß durch eine Absorberfläche mit einer Öffnung gelöst, wobei von der Lichtquelle ausgehendes Licht, das von der Spiegeleinrichtung auf die Absorberfläche (anstelle aus dem Scheinwerfer hinaus) umgelenkt wird, dort absorbiert wird, mit Ausnahme von Licht, das durch die Öffnung als begrenzter Lichtstrahl hindurchtritt, sowie durch einen lichtempfindlichen Sensor, welcher in Sehlinie von der Spiegeleinrichtung hinter der Öffnung liegt und welcher zum Detektieren des durch die Öffnung hindurchtretenden Lichtstrahls zum Erfassen einer Nullposition der Winkelposition des Lichtmoduls eingerichtet ist. Unter "Sehlinie" wird hierbei ein unterbrechungsfreier Ausbreitungsweg eines fiktiven Lichtstrahls verstanden, auch unter Berücksichtigung von gegebenenfalls vorhandenen optischen Elementen wie Spiegel oder Linsen, die die Sehlinie durch Reflektion oder Brechung von einer einfachen Geraden abweichen lassen, ohne jedoch zu nennenswerten Beeinträchtigungen des Lichtsignals zu führen.

Aufgrund dieser Lösung kann durch die Öffnung in der Absorberfläche Licht als begrenzter Lichtstrahl hindurchtreten; mittels des Stellantriebs wird das Lichtmodul hinsichtlich der Winkelposition verschwenkt, wobei mittels des lichtempfindlichen Sensor eine Intensität des durch die Öffnung hindurchtretenden Lichtstrahls detektiert wird. Diese erfindungsgemäße Lösung ermöglicht eine zuverlässige Kalibrierung bzw. Erfassung einer Nullposition des Antriebmotors der Modulverstellung. Ein weiterer Vorteil ist die geringe Zahl von Komponenten, die über die eigentlichen Betriebskomponenten des Scheinwerfers hinaus vorgesehen werden, da die Lichtquelle zusätzlich für den Referenzlauf zum Einsatz kommt (doppelte Nutzung der Lichtquelle).

In einem besonders zweckmäßigen Anwendungsfall ist das Lichtmodul zum Ausführen einer Leuchtweiteneinstellung (zumindest) um eine horizontale Achse verschwenkbar. Gemäß einer vorteilhaften Weiterbildung der Erfindung kann die Spiegeleinrichtung ein Mikrospiegelarray sein; durch dieses kann während des Erfassens der Nullposition Licht, das von der Lichtquelle eingestrahlt wird, von zumindest einem Teil des Mikrospiegelarrays auf die Absorberfläche gelenkt werden.

Um die Messung abhängig von der Winkelposition zuverlässig zu ermöglichen, ist erfindungsgemäß eine Anordnung vorgesehen, in der die Absorberfläche relativ zum verschwenkbaren Lichtmodul feststehend angeordnet ist, z.B. als eine Komponente des Lichtmoduls, wogegen der Sensor von dem Lichtmodul unabhängig angeordnet ist, beispielsweise in dem Scheinwerfer außerhalb des Lichtmoduls fest angebracht. In einer Variante ist umgekehrt der Sensor zum verschwenkbaren Lichtmodul relativ feststehend angeordnet während die Absorberfläche von dem Lichtmodul unabhängig, z.B. im Scheinwerfer fest montiert, angeordnet ist.

Der durch die Öffnung der Absorberfläche hindurchtretende Lichtstrahl kann direkt auf den lichtempfindlichen Sensor treffen oder auf diesen indirekt gelenkt werden, nämlich durch eine optisch wirksame Umlenkeinrichtung. Diese Umlenkeinrichtung kann z.B. ein in geeigneter Weise angeordneter Umlenkspiegel sein, oder sie kann ein in geeigneter Weise zwischen der Öffnung der Absorberfläche und dem lichtempfindlichen Sensor angeordneter Lichtleiter sein. Die Umlenkeinrichtung kann innerhalb des Lichtmoduls - insbesondere als eine Komponente darin - oder außerhalb des Lichtmoduls, beispielsweise in definierter Lage relativ zum Sensor, positioniert sein.

Das Lichtmodul kann z.B. in einem Tragrahmen des Scheinwerfers gehalten sein, wobei der Tragrahmen den Stellantrieb aufweist, mittels dessen das Lichtmodul zum Einstellen einer für den Betrieb voreingestellten Winkelposition verschwenkbar ist. Nach der Lichtquelle und der Spiegeleinrichtung ist im Lichtgang in der Regel eine Abbildungsoptik vorgesehen, die vorzugsweise Teil des Lichtmoduls ist, jedoch auch unabhängig von dem Lichtmodul im Scheinwerfer montiert sein kann.

Gemäß einer Variante der Erfindung kann die Spiegeleinrichtung ein Spiegel sein, der im Strahlengang zwischen der Lichtquelle und dem Mikrospiegelarray angeordnet ist; alternativ kann der Spiegel dem Mikrospiegelarray im Strahlengang nachgeordnet sein. Gemäß der Erfindung wird bei einem Verfahren zum Bestimmen einer Nullposition einer Winkelposition eines Lichtmoduls in einem erfindungsgemäßen Scheinwerfer von der Lichtquelle ausgehendes Licht über die Spiegeleinrichtung auf die Absorberfläche geleitet; der Stellantrieb kann dann das Lichtmodul hinsichtlich seiner Winkelposition verschwenken, wobei mittels des lichtempfindlichen Sensors eine Intensität des durch die Offnung hindurchtretenden Lichtstrahls detektiert wird.

Hierbei erfolgt das Erfassen der Nullposition beispielsweise bei jener Winkelposition, bei welcher ein Maximum der Lichtintensität detektiert wird; mit anderen Worten wird aufgrund der winkelabhängigen Messung die Nullposition für jenen Wert des Winkels bestimmt, bei dem das Maximum der Lichtintensität auftritt (oder alternativ ein anderer ausgezeichneter Punkt des winkelabhängigen Verlaufs der Lichtintensität).

Die Erfindung samt weiteren Einzelheiten und Vorzügen wird im Folgenden anhand von beispielhaften Ausführungsformen näher erläutert, die in den beigefügten Zeichnungen gezeigt sind. Die Ausführungsformen sollen die Erfindung illustrieren und sind nicht einschränkend für die Erfindung auszulegen. Die Zeichnungen zeigen in schematischer Form:
- Fig. 1: einen KFZ-Scheinwerfer mit einem Mikrospiegelarray und einer Messeinrichtung zum Referenzieren des Mikrospiegelarrays gemäß einer Ausführungsform der Erfindung,
- Fig. 2: ein Beispiel eines Lichtbildes, das mit einem Scheinwerfer der Fig. 1 erzeugt werden kann;
- Fig. 3: eine Ansicht des Mikrospiegelarrays des Scheinwerfers der Fig. 1;
- Fig. 4: eine Ansicht der lichtabsorbierenden Fläche eines Absorbers in dem Scheinwerfer der Fig. 1;
- Fig. 5: zeigt ein Beispiel eines Messsignals der Messeinrichtung als Funktion der Winkelposition des Mikrospiegelarrays; und
- Fig. 6 und 7: Umlenkeinrichtungen, die das zu messende Licht dem Sensor indirekt zuleiten.

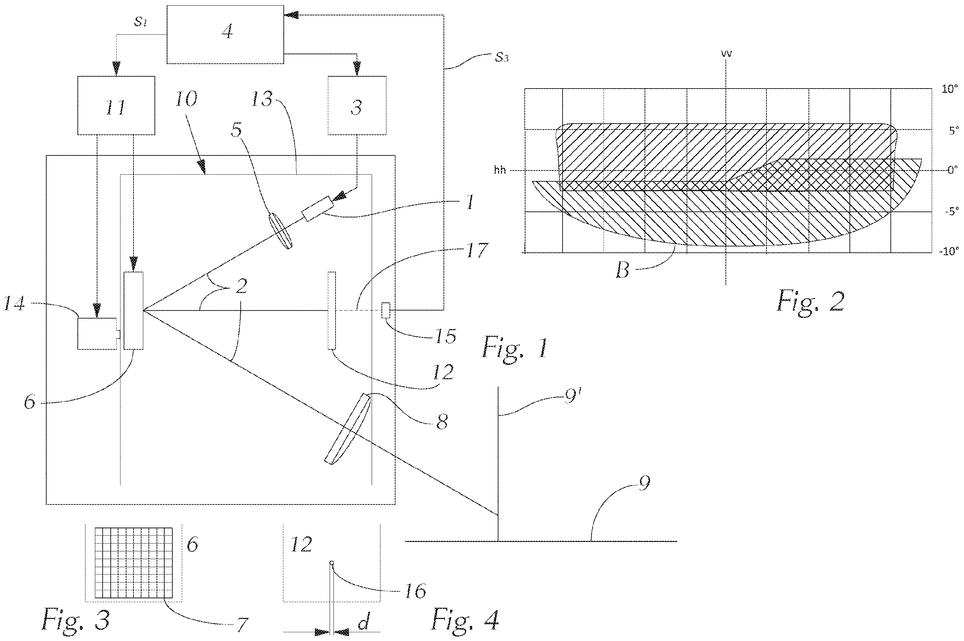

In Fig. 1 ist ein erstes Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers ist eine Lichtquelle 1, die einen Lichtstrahl 2 abgibt, und welcher eine Ansteuerung 3 zugeordnet ist, wobei diese Ansteuerung 3 zur Stromversorgung der Lichtquelle 1 sowie zur deren Überwachung oder z.B. zur Temperaturkontrolle dient und auch zum Modulieren der Intensität des abgestrahlten Lichtstrahls eingerichtet sein kann. Unter "Modulieren" wird in Zusammenhang mit der vorliegenden Erfindung verstanden, dass die Intensität der Lichtquelle geändert werden kann, sei es kontinuierlich oder gepulst, im Sinne eines Ein- und Ausschaltens. Zusätzlich gibt es noch die Möglichkeit des Ein- und Ausschaltens für eine gewisse Zeit. Dabei werden in bevorzugter Weise LED-Lichtquellen verwendet, welche mit hohen Strömen betrieben werden können - man spricht von "High Power LEDs" -, um einen möglichst hohen Lichtstrom und damit eine möglichst hohe Leuchtdichte auf einem DMD-Chip zu erreichen.

Die Ansteuerung 3 erhält ihrerseits wiederum Signale von der zentralen Steuereinheit 4. Dieser können Signale verschiedener Art zugeführt werden, wie z.B. Schaltbefehle zum Umschalten von Fernlicht auf Abblendlicht oder andere Signale, die beispielsweise von Sensoren, wie Kameras, aufgenommen werden, welche die Beleuchtungsverhältnisse, Umweltbedingungen und/oder Objekte auf der Fahrbahn erfassen. Auch können die Signale von einer Fahrzeug-Fahrzeug-Kommunikationsinformation stammen. Die hier schematisch als Block gezeichnete Steuereinheit 4 kann außerhalb des Scheinwerfers angeordnet oder vollständig oder teilweise in dem Scheinwerfer enthalten sein.

Der Lichtquelle 1 kann eine Optik 5 nachgeordnet sein, deren Ausbildung unter anderem von der Art, Anzahl und der räumlichen Platzierung der verwendeten Leuchtmittel, wie Laserdioden oder LEDs sowie von der erforderlichen Strahlqualität abhängt, und welche vor allem dafür sorgen soll, dass das von der Lichtquelle abgegebene Licht möglichst homogen auf die Mikrospiegel eines Mikrospiegelarrays 6 trifft.

Fig. 3 zeigt eine symbolische Darstellung des Mikrospiegelarrays 6 in einer Ansicht auf die Fläche, die durch die Vielzahl der Mikrospiegel des Arrays gebildet wird. Wie bekannt ist, können die einzelnen Mikrospiegel des Mikrospiegelarrays 6 hinsichtlich ihrer Winkelstellung relativ zum einfallenden Lichtstrahl 2 verkippt werden.

Wieder bezugnehmend auf Fig. 1 gelangt nun der fokussierte bzw. geformte Lichtstrahl 2 zu diesem Mikrospiegelarray 6, auf welchem durch entsprechende Stellung der einzelnen Mikrospiegel ein Leuchtbild 7 geformt wird. Das Leuchtbild 7 kann sodann über eine Abbildungsoptik 8 als Lichtbild B auf eine Straße 9 projiziert werden. Das Lichtbild B kann beispielsweise zu Kontrollzwecken mithilfe eines vorübergehend aufgestellten Schirmes 9' sichtbar gemacht und gemessen werden; ein Beispiel eines derartigen Lichtbilds B ist in Fig. 2 gezeigt. Die Steuereinheit 4 liefert Signale s₁ an eine Arrayansteuerung 11, welche die einzelnen Mikrospiegel des Arrays 6 in der dem gewünschten Lichtbild B entsprechenden Weise ansteuert. Die einzelnen Mikrospiegel des Arrays 6 können hinsichtlich der Frequenz, der Phase und des Auslenkwinkels individuell angesteuert werden.

Die Lichtteile, die von den Mikrospiegeln des Arrays 6 nicht zur Abbildungsoptik 8 (und durch diese weiter nach außen) gelenkt werden, werden auf einen Absorber 12 geleitet, welcher dem Spiegel zugewandt eine lichtabsorbierenden Fläche aufweist. Der Absorber 12 hat die Funktion, das von dem Array 6 ferngehaltene Licht zu absorbieren, wodurch insbesondere unerwünschte Reflexionen im Scheinwerfer unterbunden werden. Die Komponenten des Strahlengangs von der Lichtquelle 1 über das Array 6 bis zur Abbildungsoptik 8 sowie der Absorber 12 sind vorteilhafterweise in einem Lichtmodul 10 angeordnet, indem diese Komponenten fest angebracht sind, wodurch für eine definierte Lagebeziehung dieser Komponenten - insbesondere der Lichtquelle 1, Optik 5, des Arrays 6 und Absorbers 12 - gesorgt ist. Häufig, aber nicht notwendiger Weise, ist auch die Abbildungsoptik 8 im Lichtmodul 10 enthalten. Das Lichtmodul 10 kann zusätzlich, wie in dem Ausführungsbeispiel gezeigt, in einem Tragrahmen 13 montiert sein, der das Lichtmodul 10 bzw. dessen Komponenten hält und als Ganzes vertikal verschwenkt werden kann. Der Tragrahmen 13 bzw. das Lichtmodul 10 ist durch eine verstellbare Halterung 14 gehalten, vorzugsweise mithilfe des Stellantriebs der Halterung 14 zumindest um eine horizontale Achse schwenkbar. Somit ist das Lichtmodul 10 in seiner vertikalen Ausrichtung mithilfe der Halterung 14 einstellbar; diese Halterung dient auf diese Weise als Leuchtweitenregelung des Scheinwerfers. Der Stellantrieb der Halterung 14 kann z.B. als Schrittmotor ausgebildet sein.

Der Tragrahmen 13 bildet eine mit der verstellbaren Halterung 14 einstellbare "Schnittstelle" zum Scheinwerfer einschließlich des Sensors 15. Der Tragrahmen 13 kann so an den jeweiligen Scheinwerfer angepasst werden; bei Bedarf kann er auch andere Module halten, die dann mit referenziert werden können. Es ist daher im Allgemeinen erforderlich, die Halterung/Verstelleinheit 14 an die aktuelle Situation im Scheinwerfer anzupassen, um der jeweiligen Geometrie sowie gegebenenfalls den auftretenden Kräften gerecht zu werden. Somit ist es in der Regel notwendig, die vertikale Ausrichtung des Lichtmoduls 10, somit die Stellung des Antriebs der Halterung 14, zu kalibrieren. Dies ist insbesondere bei einem durch einen Schrittmotor implementierten Antrieb in der Regel erforderlich, zumal ein Schrittmotor häufig nur inkrementell angesteuert wird. Zur Kalibrierung wird ein Referenzlauf durchgeführt, durch den die Positionierung der Halterung - bzw. der Leuchtweitenregelung - ermittelt wird. Auf diese Weise kann eine Nullposition bestimmt oder festgelegt werden, und nachfolgend werden von dieser Position ausgehend die Auslenkungen des Antriebs bzw. Verfahrschritte des Schrittmotors gezählt, um die aktuelle Position des Antriebs / Schrittmotors zu erfassen.

Gemäß der Erfindung erfolgt die Messung der Position in dem Referenzlauf mithilfe eines lichtempfindlichen Sensors 15, der vom Mikrospiegelarray 6 aus gesehen hinter dem Absorber 12 angeordnet und derart montiert ist, dass seine Position durch ein Verstellen des Lichtmoduls 10 durch den Stellantrieb der Halterung 14 nicht beeinflusst wird. Beispielsweise ist der Sensor 15 unabhängig von dem Tragrahmen 13 in dem Scheinwerfer montiert, vorzugsweise außerhalb des Tragrahmens. In dem Absorber 12 ist eine Öffnung 16 (Fig. 4) ausgebildet, durch welche ein Teil des Lichts, das auf den Absorber gerichtet wird, in Form eines begrenzten Lichtstrahls 17 hindurchtreten kann. Dieses Licht wird von dem Sensor 15, der z.B. als Photodiode ausgebildet ist, detektiert, und ein dem entsprechendes Detektionssignal s3 wird an die Steuereinheit 4 geleitet, in der die Auswertung und Erfassung der Nullposition durchgeführt wird. Die Nullposition wird dadurch erkannt, dass das hindurchtretende Licht auf den Sensor 15 trifft, während in den anderen Stellungen des Antriebs der Sensor keinen (oder nur geringen) Lichteinfall detektiert.

Bezugnehmend auf Fig. 4 ist die Öffnung 16 in dem Absorber 12, genauer gesagt in dessen lichtabsorbierender Fläche, an einer Stelle ausgebildet, die der Stellung des Antriebs in der Nullposition entspricht, um die Definition der Nullposition zu ermöglichen. Die Öffnung 16 ist beispielsweise kreisförmig oder quadratisch geformt. Der Durchmesser d der Öffnung 16 wird hierbei groß genug gewählt, um einen genügenden Lichtstrom für die Detektion durch den Sensor durchzulassen. Soweit dies erfüllt ist, wird jedoch ein kleiner Durchmesser d bevorzugt, beispielsweise unter 1 mm; dies ist zweckmäßig, um den Strahl 17 eng zu halten, damit ein mit dem Sensor gut erkennbarer Hell-Dunkel-Übergang während des Referenzlaufs erreicht werden kann.

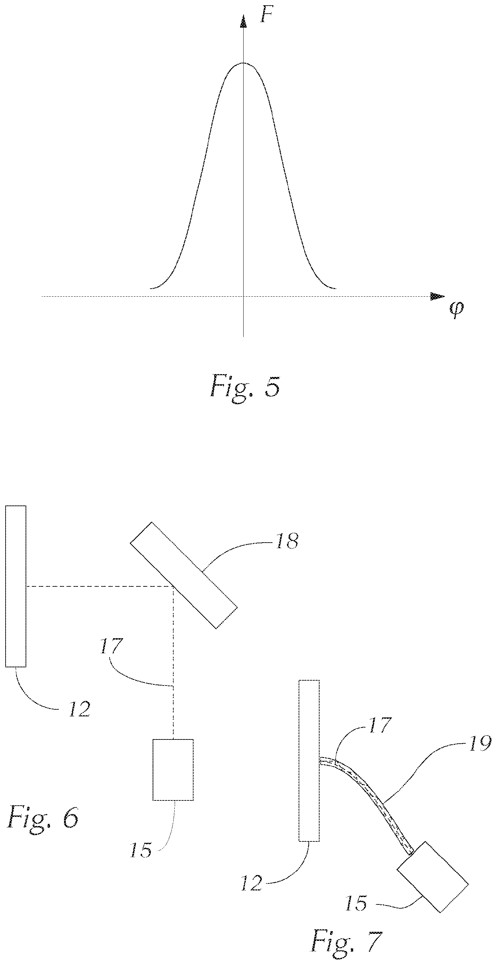

Der Referenzlauf wird von der Steuereinheit 4 durchgeführt und überwacht. Während eines Referenzlaufs wird das Mikrospiegelarray 6 auf Dunkel geschaltet, sodass das gesamte Licht auf die Absorberfläche geleitet wird. Somit tritt Licht durch die Öffnung 16 und wird von dem Sensor 15 detektiert. Fig. 5 zeigt ein Beispiel eines Detektionssignals F als Funktion der Winkelposition ϕ des Arrays 6. Die Halterung verschwenkt das Array 6 solange, bis der Sensor 15 eine Flanke bzw. Spitze des Signals F detektiert. Die Position der Flanke bzw. die Mittelposition der Spitze wird dann als Referenzwert gespeichert und für die weiteren Verstellvorgänge als Nullposition verwendet.

Bezugnehmend auf Fig. 6 und 7 kann es - beispielsweise aus Platzgründen - nicht möglich oder nicht zweckmäßig sein, den Sensor 15 in Sichtlinie der Öffnung 16 zu platzieren. In einem solchen Fall kann eine Umlenkoptik (Umlenkeinrichtung) das durch die Öffnung hindurchtretende Licht 17 zu dem Sensor 15 leiten. Die Umlenkoptik kann z.B. mit Reflektorflächen, beispielsweise einem Spiegel 18 und/oder Lichtleitfasern 19 verwirklicht werden. Natürlich sind auch andere Ausführungen der Umlenkeinrichtung möglich, die Umlenkspiegel, Lichtleiter, und/oder weitere optische Komponenten umfassen können.

Die erfindungsgemäße Anordnung des Sensors ermöglicht eine zuverlässige Kalibrierung bzw. Erfassung einer Nullposition des Antriebmotors der Spiegelverstellung, mit einer geringen Zahl von Komponenten, die für die Erfassung der Nullposition aufgenommen werden müssen. Hierbei ist insbesondere die doppelte Nutzung der Lichtquelle hervorzuheben, da diese über ihre eigentliche Funktion hinaus zusätzlich für den Referenzlauf zum Einsatz kommt.

Ein weiterer Vorteil besteht darin, dass der Referenzlauf schneller durchgeführt werden kann, weil die zurückzulegenden Wege des Antriebsmotors kleiner sind als bei herkömmlichen Lösungen.

Durch die Ermittlung der Winkelverstellung, anstelle der Position des Motors wie bei herkömmlichen Lösungen, ermöglicht die Erfindung den Verzicht auf zusätzliche Sensorik aufseiten des Antriebsmotors. Zudem gestattet die Erfindung die implizite Berücksichtigung von Fertigungstoleranzen wie z.B. ein Verziehen des Tragrahmens, was bei herkömmlichen Lösungen gesondert berücksichtigt werden musste.

## Patentansprüche

1. Scheinwerfer für Fahrzeuge, aufweisend zumindest ein Lichtmodul (10) mit zumindest einer Lichtquelle (1) und zumindest einer Spiegeleinrichtung (6), wobei dem Lichtmodul (10) ein Stellantrieb (14) zugeordnet ist, mittels dessen das Lichtmodul (10) zum Einstellen einer für den Betrieb voreingestellten Winkelposition verschwenkbar ist,
**gekennzeichnet durch**
eine Absorberfläche (12) mit einer Öffnung, wobei von der Lichtquelle (1) ausgehendes Licht, das von der Spiegeleinrichtung (6) auf die Absorberfläche (12) umgelenkt wird, dort absorbiert wird, mit Ausnahme von Licht, das durch die Öffnung (16) als begrenzter Lichtstrahl (17) hindurchtritt, sowie
einen lichtempfindlichen Sensor (15), welcher in Sehlinie von der Spiegeleinrichtung (6) hinter der Öffnung (16) liegt und welcher zum Detektieren des durch die Öffnung hindurchtretenden Lichtstrahls (17) zum Erfassen einer Nullposition der Winkelposition des Lichtmoduls (10) eingerichtet ist. ,
wobei die Absorberfläche (12) von dem Lichtmodul (10) unabhängig angeordnet ist und der Sensor (15) relativ zum verschwenkbaren Lichtmodul (10) feststehend angeordnet ist, oder die Absorberfläche (12) relativ zum verschwenkbaren Lichtmodul (10) feststehend angeordnet ist und der Sensor (15) von dem Lichtmodul (10) unabhängig angeordnet ist.

2. Scheinwerfer nach Anspruch 1, **dadurch gekennzeichnet, dass** das Lichtmodul (10) zum Ausführen einer Leuchtweiteneinstellung um eine horizontale Achse verschwenkbar ist.

3. Scheinwerfer nach Anspruch 1 oder 2, **dadurch gekennzeichnet, dass** die Spiegeleinrichtung ein Mikrospiegelarray (6) ist, wobei der Mikrospiegelarray (6) dazu eingerichtet ist, dass während des Erfassens der Nullposition Licht, das von der Lichtquelle (1) eingestrahlt wird, von zumindest einem Teil des Mikrospiegelarrays (6) auf die Absorberfläche (12) gelenkt wird.

4. Scheinwerfer nach Anspruch 1, **gekennzeichnet durch** eine optisch wirksame Umlenkeinrichtung (18, 19), die dazu eingerichtet ist, den durch die Öffnung (16) der Absorberfläche (12) hindurchtretenden Lichtstrahl (17) auf den lichtempfindlichen Sensor (15) zu leiten, wobei die Umlenkeinrichtung bevorzugt außerhalb des Lichtmoduls angeordnet ist.

5. Scheinwerfer nach Anspruch 4, **dadurch gekennzeichnet, dass** die optisch wirksame Umlenkeinrichtung ein Umlenkspiegel (18) ist.

6. Scheinwerfer nach Anspruch 4, **dadurch gekennzeichnet, dass** die optisch wirksame Umlenkeinrichtung ein zwischen der Öffnung (16) und dem lichtempfindlichen Sensor (15) befindlicher Lichtleiter (19) ist.

7. Scheinwerfer nach einem der vorhergehenden Ansprüche, **dadurch gekennzeichnet, dass** das Lichtmodul (10) in einem Tragrahmen (13) des Scheinwerfers gehalten ist, wobei der Tragrahmen (13) den Stellantrieb (14) aufweist, mittels dessen das Lichtmodul (10) zum Einstellen einer für den Betrieb voreingestellten Winkelposition verschwenkbar ist

8. Verfahren zum Bestimmen einer Nullposition einer Winkelposition eines Lichtmoduls (10) in einem Scheinwerfer nach einem der vorhergehenden Ansprüche, **dadurch gekennzeichnet, dass** von der Lichtquelle (1) ausgehendes Licht über die Spiegeleinrichtung (6) auf die Absorberfläche (12) geleitet wird und der Stellantrieb (14) das Lichtmodul (10) hinsichtlich seiner Winkelposition verschwenkt, wobei das Bestimmen der Nullposition bei jener Winkelposition erfolgt, bei der mittels des lichtempfindlichen Sensor (15) eine Intensität des durch die Öffnung hindurchtretenden Lichtstrahls (17) detektiert wird.

9. Verfahren nach Anspruch 8, **dadurch gekennzeichnet, dass** die Nullposition bei jener Winkelposition des Lichtmoduls (10) erfasst wird, bei welcher ein Maximum der Lichtintensität detektiert wird.

## Claims

1. Headlamp for vehicles, comprising at least one light module (10) having at least one light source (1) and at least one mirror device (6), wherein to the light module (10) there is assigned an actuator (14) configured to pivot the light module (10) in order to set an angular position which is preset for operation,
**characterised by**
an absorber surface (12) with an opening, wherein light emanating from the light source (1) and deflected by the mirror device (6) onto the absorber surface (12) is absorbed there, with the exception of light passing through the opening (16) as a limited light beam (17), and
a light-sensitive sensor (15) which is located behind the opening (16) in the line of sight from the mirror means (6) and which is adapted to detect the light beam (17) passing through the opening so as to detect a zero position of the angular position of the light module (10), wherein the absorber surface (12) is arranged independently of the light module (10) and the sensor (15) is arranged fixed relative to the pivotable light module (10), or the absorber surface (12) is arranged fixed relative to the pivotable light module (10) and the sensor (15) is arranged independently of the light module (10).

2. Headlamp according to claim 1, **characterised in that** the light module (10) is pivotable about a horizontal axis for carrying out a headlamp range adjustment.

3. Headlamp according to claim 1 or 2, **characterised in that** the mirror device is a micro-mirror array (6), said micro-mirror array (6) being configured such that during detection of the zero position, light irradiated by the light source (1) is directed by at least a part of the micro-mirror array (6) onto the absorber surface (12).

4. Headlamp according to claim 1, **characterised by** an optically effective deflecting device (18, 19) which is arranged to direct the light beam (17) that penetrates the opening (16) of the absorber surface (12) onto the light-sensitive sensor (15), the deflecting device preferably being arranged outside the light module.

5. Headlamp according to claim 4, **characterised in that** the optically effective deflecting device is a deflecting mirror (18).

6. Headlamp according to claim 4, **characterised in that** the optically effective deflecting device is a light guide (19) located between the opening (16) and the light-sensitive sensor (15).

7. Headlamp according to any one of the preceding claims, **characterised in that** the light module (10) is supported in a supporting frame (13) of the headlamp, the supporting frame (13) comprising the actuator (14) configured to pivot the light module (10) for setting an angular position preset for operation.

8. Method for determining a zero position of an angular position of a light module (10) in a headlamp according to any one of the preceding claims, **characterised in that** light emanating from the light source (1) is directed via the mirror device (6) onto the absorber surface (12) and the actuator (14) pivots the light module (10) with respect to its angular position, wherein determining the zero position takes place for that angular position at which an intensity of the light beam (17) penetrating through the opening is detected by means of the light-sensitive sensor (15).

9. Method according to claim 8, **characterised in that** the zero position is determined at that angular position of the light module (10) at which a maximum of the light intensity is detected.

## Revendications

1. Projecteur pour véhicules, comprenant au moins un module d'éclairage (10) avec au moins une source lumineuse (1) et au moins un dispositif de miroir (6), un actionneur (14) étant associé au module d'éclairage (10), au moyen dudit actionneur le module d'éclairage (10) étant pivotant pour régler une position angulaire prédéfinie pour le fonctionnement, **caractérisé en ce que**
une surface absorbante (12) avec une ouverture, de la lumière émanant de la source de lumière (1) et déviée par le dispositif à miroir (6) sur la surface absorbante (12) étant absorbée à la dernière, à l'exception de la lumière passant à travers l'ouverture (16) sous forme de faisceau lumineux limité (17), et
un capteur photosensible (15) qui est situé derrière l'ouverture (16) dans la ligne de visée du moyen de miroir (6) et qui est adapté pour détecter le faisceau lumineux (17) passant à travers l'ouverture pour détecter une position zéro de la position angulaire du module de lumière (10),
dans lequel la surface absorbante (12) est disposée indépendamment du module d'éclairage (10) et le capteur (15) est disposé de manière fixe par rapport au module d'éclairage pivotant (10), ou la surface absorbante (12) est disposée de manière fixe par rapport au module d'éclairage pivotant (10) et le capteur (15) est disposé indépendamment du module d'éclairage (10).

2. Projecteur selon la revendication 1, **caractérisé en ce que** le module d'éclairage (10) peut pivoter autour d'un axe horizontal pour effectuer un réglage de la portée des phares.

3. Projecteur selon la revendication 1 ou 2, **caractérisé en ce que** le dispositif à miroir est un réseau de micro-miroirs (6), le réseau de micro-miroirs (6) étant configuré de telle sorte que, lors de la détection de la position zéro, la lumière irradiée par la source lumineuse (1) est dirigée par au moins une partie du réseau de micro-miroirs (6) sur la surface absorbante (12).

4. Projecteur selon la revendication 1, **caractérisé par** un dispositif de déviation optique (18, 19) qui est configuré pour diriger le faisceau lumineux (17) passant à travers l'ouverture (16) de la surface absorbante (12) sur le capteur photosensible (15), le dispositif de déviation étant de préférence agencé à l'extérieur du module d'éclairage.

5. Projecteur selon la revendication 4, **caractérisé en ce que** le dispositif de déviation optique est un miroir de déviation (18).

6. Projecteur selon la revendication 4, **caractérisé en ce que** le dispositif de déviation optique est un guide de lumière (19) situé entre l'ouverture (16) et le capteur photosensible (15).

7. Projecteur selon l'une quelconque des revendications précédentes, **caractérisé en ce que** le module d'éclairage (10) est soutenu dans un cadre de support (13) du phare, le cadre de support (13) comportant l'actionneur (14) au moyen duquel le module d'éclairage (10) est pivotant pour régler une position angulaire prédéfinie pour le fonctionnement.

8. Procédé pour déterminer une position zéro d'une position angulaire d'un module d'éclairage (10) dans un projecteur selon l'une quelconque des revendications précédentes, **caractérisé en ce que** la lumière émanant de la source lumineuse (1) est dirigée par l'intermédiaire du dispositif à miroir (6) sur la surface d'absorption (12) et l'actionneur (14) fait pivoter le module d'éclairage (10) par rapport à sa position angulaire, dans laquelle la détermination de la position zéro a lieu à la position angulaire à laquelle une intensité du faisceau lumineux (17) traversant l'ouverture est détectée par le capteur photosensible (15).

9. Procédé selon la revendication 8, **caractérisé en ce que** la position zéro est déterminée à la position angulaire du module de lumière (10) à laquelle un maximum de l'intensité lumineuse est détecté.
